# EUROPEAN PATENT APPLICATION

(11) **EP 2 993 638 A1**
(43) Date of publication of application: **09.03.2016**
(21) Application number: 15183570.9
(22) Date of filing: 02.09.2015
(51) Int. Cl.: G06Q 30/02, G06Q 30/06, G09F 9/33, D03D 1/00

(54) **ELECTRONIC GARMENT PATTERN DISTRIBUTION**

(30) Priority: 03.09.2014 US 201462045401 P; 13.08.2015 US 201514825948
(71) Applicant: Accenture Global Services Limited, Dublin 4 (IE)
(72) Inventor: JACOBSON, Erik, St Albans, Hertfordshire AL1 1SJ (GB); BAUMANIS, Rihards, Riga 1039 (LV); FRY, Jocelyn A., London, Greater London E9 7DX (GB); CROSS, Gillian, London, greater London SW11 1LZ (GB)
(74) Representative: Conroy, John

(57) **Abstract**

The present disclosure describes techniques for managing patterns for electronic garments or "framework garments." One example method includes presenting one or more representations each associated with a corresponding pattern for use with a framework garment; receiving a selection of a particular representation from the one or more representations, the particular representation corresponding to a particular pattern; and in response to receiving the selection of the particular representation, causing the particular pattern to be uploaded to the framework garment.

## Description

### FIELD

This disclosure relates to managing patterns for use with electronic garments.

### BACKGROUND

In the fashion industry, designers are constantly producing new garment designs. The garments vary in construction, the types of textiles used, the patterns and designs appearing on the textiles, and in countless other ways. In addition, miniaturization of electronic components has made computing systems small enough to be integrated into wearable garments. Some such garments may include entire computer systems and display resources capable of displaying images or patterns.

### SUMMARY

The present disclosure describes techniques for managing patterns for use with electronic garments or "framework garments." "Framework garments" may include integrated display resources allowing the look of the garments to be customized by displaying different patterns. The patterns may be static images or animated scenes. By allowing the look of a garment to be changed electronically, many of the challenges associated with "fast fashion" may be addressed. Examples of framework garments include, but are not limited to, garments including integrated display resources developed by CUTECIRCUIT and STUDIO XO.

One example method according to the present disclosure includes presenting a user with one or more patterns for use with a framework garment. The user may be presented with visual representations, e.g., images, of the patterns and information about the patterns such as a description, a designer, and a price. The user may select a particular pattern, and cause the particular pattern to be uploaded to and displayed on the framework garment.

In one aspect, a computer-implemented method includes presenting one or more representations each associated with a corresponding pattern for use with a framework garment; receiving a selection of a particular representation from the one or more representations, the particular representation corresponding to a particular pattern; and in response to receiving the selection of the particular representation, causing the particular pattern to be uploaded to the framework garment.

In another aspect, a computer-implemented method includes determining that a particular user has entered a particular area; in response to determining that the particular user has entered the particular area, presenting one or more representations associated with the particular area to the particular user, each representation associated with a corresponding pattern for use with a framework garment; determining whether the particular user has selected a particular representation from the one or more representations associated with the particular area, the particular representation corresponding to a particular pattern; and in response to determining that the particular user has selected the particular representation, causing the particular pattern to be uploaded to the framework garment.

The details of one or more implementations are set forth in the accompanying drawings and the description, below. Other potential features of the disclosure will be apparent from the description and drawings, and from the claims.

### BRIEF DESCRIPTION OF THE DRAWINGS

FIG. 1 is a diagram of an example system for managing patterns for use with electronic framework garments.
FIG. 2 is a message sequence diagram of an example interaction between components for managing patterns for use with a framework garment.
FIG. 3 is an example user interface presenting patterns for use with a framework garment.
FIG. 4 is an example user interface presenting multiple patterns for use with a framework garment.
FIG. 5 is an example user interface presenting multiple patterns for use with a framework garment and status indicators for the patterns.
FIG. 6 is an example user interface for managing patterns previously purchased by the user.
FIG. 7 is a flow chart of an example method for managing patterns for use with electronic framework garments.
FIG. 8 is a flow chart of an example method for presenting particular patterns based on the user's location.
FIG. 9 is a schematic diagram of an example of a generic computer system.

### DETAILED DESCRIPTION

In the fashion industry, the term "fast fashion" refers to the quick movement of designs from fashion shows to retailers in order to take advantage of current trends. This paradigm places increased strain on the traditional garment supply chain. Retailers have a decreased window to effectively research and design garments early on with their core consumer base. This may lead to stagnation in the creative design process as retailers simply copy each other's designs rather than take an innovative, differentiating risk which might increase sales over competitors. The compact timeframes may also result in insufficient produce and trial samples effectively. Rushed garment manufacturing may also lead to inferior products. In addition, such a quick product cycle may lead to inventory challenges such as overstock, leading to additional cost, or understock, leading to lost sales. Distribution and stocking of garments may also be challenging and costly.

Poor production standards resulting from the quick turnaround requirements may result in garments that do not meet customer needs, resulting in excess stock which goes straight to landfill. Factory working conditions have also been put under strain due to the need to constantly produce collection after collection. These issues result in decreased customer trust in a retailer which may, in turn, impact sales.

Accordingly, the present disclosure describes techniques for managing patterns for use with electronic garments or "framework garments." "Framework garments" may include integrated display resources allowing the look of the garments to be customized by displaying different patterns. The patterns may be static images or animated scenes. By allowing the look of a garment to be changed electronically, many of the challenges associated with "fast fashion" may be addressed. One example method according to the present disclosure includes presenting a user with one or more patterns for use with a framework garment. The user may be presented with visual representations. e.g., images, of the patterns and information about the patterns such as a description, a designer, and a price. The user may select a particular pattern and cause the particular pattern to be uploaded to and displayed on the framework garment.

Another example method involves presenting particular patterns to the user based on the user's location. The method includes determining that a particular user has entered a particular area, and, in response, presenting one or more patterns associated with the particular area to the user. If the user selects one of the patterns, the pattern may be uploaded to the framework garment. In some cases, the selected pattern may first be downloaded and stored on the user's mobile device, and then uploaded to the framework garment. If the user does not select a pattern and leaves the particular area, the patterns may be hidden. If the user has selected and uploaded a particular pattern to the framework garment and leaves the particular area, the particular pattern may be removed from the framework garment. In some cases, the patterns may be hidden or removed from the framework garment based on factors other than the user's presence in the particular area, such as, for example, after the passage of a certain amount of time. In some implementations, patterns may be presented to the user at a particular time. For example, the user may be presented with a particular pattern to coincide in time with an event, such as, for example, a designer showcase, a runway show, or other event.

The techniques described herein may provide several advantages. By allowing a user to browse, purchase and activate patterns on a framework garment, many of the costs and challenges of "fast fashion" may be addressed or alleviated. In addition, providing the ability for users to try on and rent designs provides additional consumer benefit and may lead to increased sales. Providing retailers with the ability to customize presented patterns by location or by time may allow specifically targeted marketing of specific patterns, such as, for example, exclusive patterns for a particular store being presented when a user enters the store. Such targeted marketing may lead to increased sales. Further, the techniques described herein may allow a user to more easily purchase, upload, and activate patterns on framework garments. Additionally, a retailer may offer certain patterns for free to users for a certain "trial" period including a certain amount of wear time. At the end of the wear time, the user can be prompted for feedback on the trial pattern. This feedback can be used by the retailer for market research and analysis. Further, by tracking user use and wear activity of particular patterns, the techniques may allow retailers greater visibility into users' behaviors and preferences, allowing the retailers to make aligned and well informed strategic decisions. Retailers may also be afforded greater flexibility and control over the introduction of designs than with previous techniques, such as, for example, by controlling the visibility of patterns based on the country or region associated with particular users.

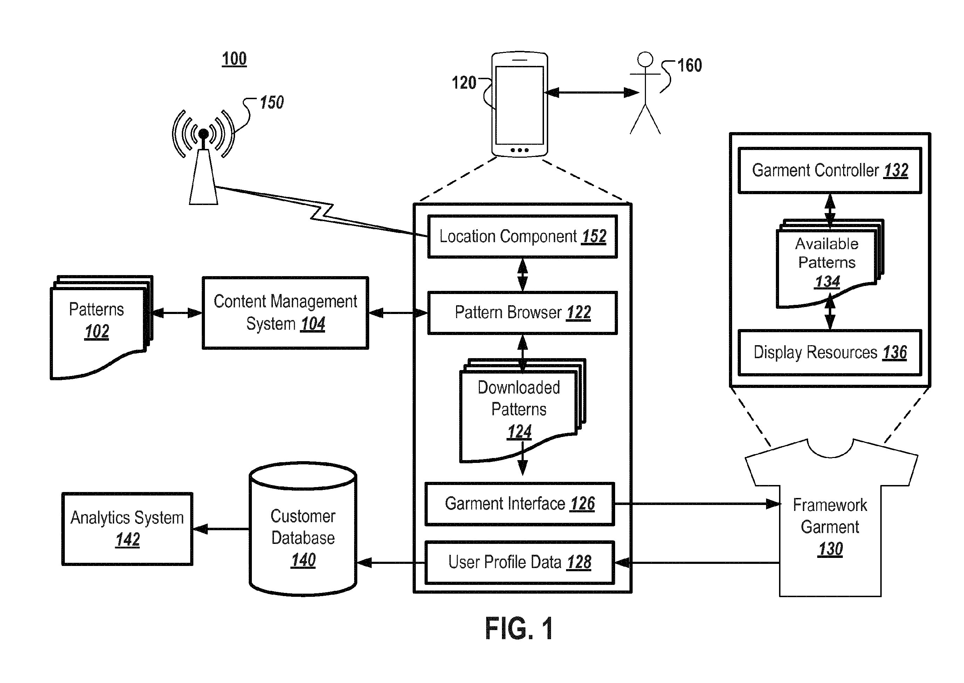

FIG. 1 is a diagram of an example system 100 for managing patterns for use with electronic framework garments, e.g., framework garment 130. As shown, system 100 includes a content management system 104 for managing one or more patterns 102 for use with framework garments such as framework garment 130. Mobile device 120 is communicatively connected to the content management system 104 and the framework garment 130. The mobile device 120 also communicates with a customer database 140 which feeds an analytics system 142. In operation, a user 160 of the mobile device 120 may access the content management system 104 using a pattern browser 122 executing on the mobile device 120. The pattern browser 122 may allow the user 160 to browse, purchase, and download patterns from the content management system 104. The pattern browser 122 may also allow the user 160 to upload patterns to the framework garment 130 for display on the garment. The mobile device 120 may also collect user profile data 128 including data about which patterns have been displayed (or "worn") on the framework garment 130. The user profile data 128 is stored in the customer database 140 for analysis by the analytics system 142.

Mobile device 120 also includes a location component 152 operable to receive location information from the location beacon 150. In some cases, the location information may be communicated to the pattern browser 122, which may present the user 160 with particular patterns associated with the user's current location that have been previously retrieved from the content management system 104. The location information may also be communicated to the content management system 104, which may in response return particular patterns associated with the user's current location to the pattern browser 122 for presentation to the user 160. For example, if the location information indicates that the user 160 has entered a particular store, the content management system 104 may present the user 160 with exclusive patterns associated with that store to purchase or try for free.

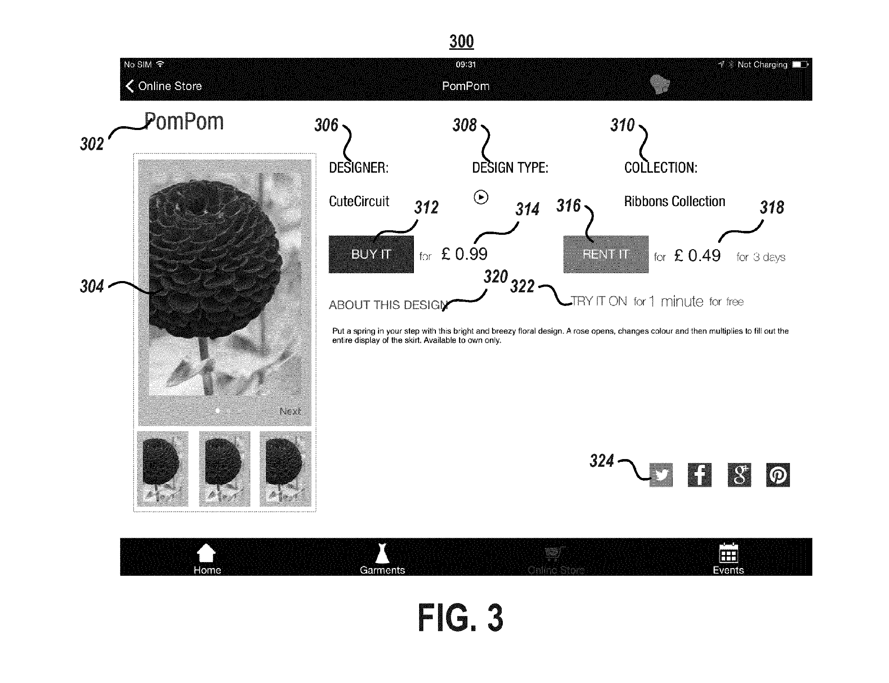

As shown, the system 100 includes a content management system 104. The content management system 104 may be a server or set of servers configured to respond to requests with various information and by performing actions associated with the patterns 102. In some cases, the content management system 104 may include a database or other data storage system for storing the patterns 102 and information about the patterns 102. For example, such a data storage system may include electronic files representing each of the patterns 102 to be uploaded to the framework garment 130 in order to display each pattern. The data storage system may also include information about each of the patterns 102, such as a description, a type or size of framework garment with which the pattern may be used, a purchase price, a rental price, a pattern type (e.g., static, animated), a designer, the collection identifier, an icon or other graphical representation to be presented to the user, or other information. The content management system 104 may present this information to the mobile device 120 in various interfaces, such as those shown in FIGS. 3-6.

The content management system 104 may also store and manage user account information associated with the user 160 of the mobile device 120. The user account information may include payment details such as credit card information, wardrobe information indicating which garments and patterns the user 160 owns, or other information about the user. The content management system 104 may also be operable to process electronic payments submitted by the user 160 to purchase or rent particular patterns of the patterns 102.

The patterns 102 may each include an electronic file or files configured to cause the framework garment 130 to display the particular pattern using display resources 136. For example, a pattern 102 may be associated with an electronic file that, when activated on the framework garment 130, changes the color of the framework garment 130 to red. The patterns 102 may also be animated patterns, such that the displayed pattern on the framework garment 130 changes over time. The operation of the framework garment 130 is explained in greater detail below.

As shown, the system 100 also includes a mobile device 120. The mobile device 120 may be any network-enabled mobile computing device including, but not limited to, a phone, a tablet, a laptop, a laptop, a smart watch, or other mobile device. In some implementations, mobile device 120 may include an operating system configured to execute software applications. Example operating systems include, but are not limited to, APPLE IOS, ANDROID, MICROSOFT WINDOWS, LINUX, or other operating systems. Mobile device 120 may include one or more processors for executing the operating system and the software applications. In some cases, the mobile device 120 may include a touchscreen interface for presenting visual information to the user 160 and receiving input from the user. The mobile device 120 may also be operable to communicate using various wireless technologies, including, but not limited to, WI-FI, LTE, BLUETOOTH, BLUETOOTH LE, Near Field Communications (NFC), or other technologies. The mobile device 120 may also include a data storage device, such as, for example, a flash drive, a random access memory (RAM) device, or other storage device.

As shown, the mobile device 120 includes a pattern browser 122. In some implementations, the pattern browser 122 may be a software application executing on the mobile device operable to interface with the content management system 104, and to display information received from the content management system 104 to the user. In some implementations, the pattern browser 122 may receive instructions from the content management system 104 on how to display the received information. These instructions may include markup language, such as Hypertext Markup Language (HTML) or Extensible Markup Language (XML), or other mechanisms controlling the layout of interfaces. The pattern browser 122 may render an interface based on these instructions and present it to the user. The pattern browser 122 may also receive input from the user, such as selections or text input, and a path to succeed input to the content management system 104 for processing.

In some implementations, the pattern browser 122 may include instructions for displaying various interface screens to the user, and may retrieve information from the content management system 104 to display in these interface screens, such as information about the patterns 102.

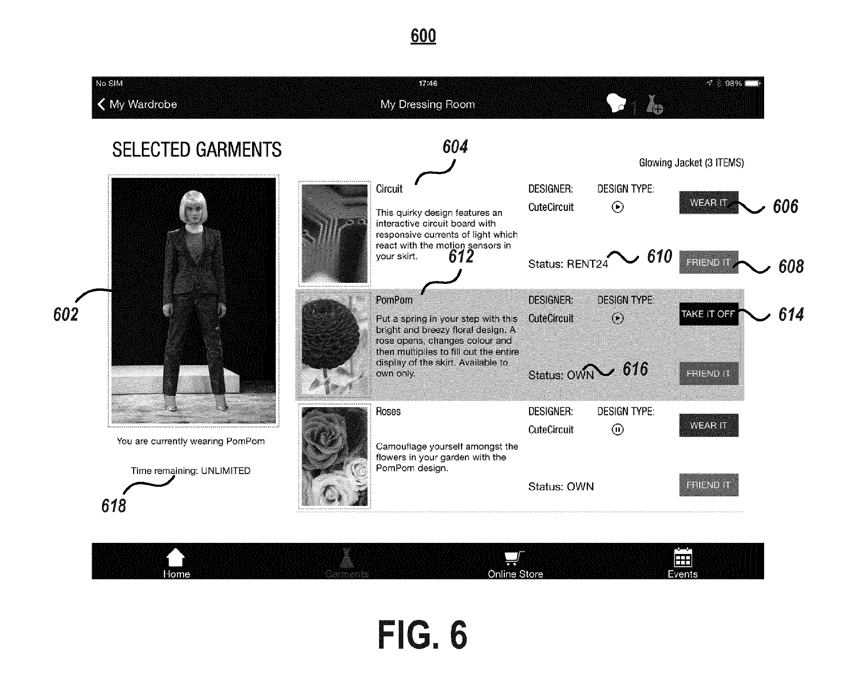

The mobile device 120 also includes one or more downloaded patterns 124. In operation, when the user 160 purchases or rents one of the patterns 102 from the content management system 104 via the pattern browser 122, a representation of the particular pattern is downloaded to the mobile device 120. In some cases, the representation of the particular pattern may include the electronic file to be uploaded to the framework garment 130 to cause the pattern to be displayed. In some implementations, the downloaded patterns 124 may be stored on the mobile device 120 in a database or other data storage structure. In some cases, the pattern browser 122 may present the downloaded pattern 124 to the user 160 in a "My Wardrobe" interface, such as the one shown in FIG. 6. In some cases, purchased or rented patterns may be stored at the content management system 104. In such a case, each time the user 160 wants to equip the framework garment 130 with a particular pattern, it may be downloaded from the content management system 104 to the mobile device 120.

The mobile device 120 also includes a garment interface 126. In operation, the garment interface 126 communicates with the framework garment 130. The garment interface 126 may be used to upload the downloaded patterns 124 to the framework garment 130 so that the downloaded patterns 124 can be displayed on the framework garment 130. In some cases, the garment interface 126 communicates with the framework garment 130 using wireless communication techniques, including, but not limited to, BLUETOOTH, BLUETOOTH LE, WI-FI, LTE, or other techniques. Garment interface 126 may also receive information from the framework garment 130, such as the user profile data 128. For example, the framework garment 130 may provide statistics on wear time for the different patterns wirelessly to the garment interface 126. As shown, this and other user profile data 128 may be transferred and stored in a customer database 140. The analytics system 142 may analyze the stored data in order to determine information about the user 160 of the mobile device 120 and of users of the system 100 in general. For example, the analytics system 142 may determine that a particular pattern is being worn often by a particular demographic and not as often by another demographic, which may indicate that patterns of that type should be marketed to the particular demographic.

System 100 also includes the framework garment 130. As previously discussed, the framework garment 130 is a specially designed garment operable to display visual patterns using a set of display resources 136. In some cases, the garment may be any type of clothing item, including a shirt, a blouse, a dress, a skirt, pants, shoes, or any other clothing item. The framework garment 130 includes a garment controller 132 that controls the operation of the display resources 136 to display one of the available patterns 134. The garment controller 132 may be communicatively coupled to each of the display resources 136, and may control their operation based on instructions included in the available patterns 134 to cause the display resources 136 to display the desired pattern. In some cases, the garment controller 132 includes or is coupled to storage device for storing the available patterns 134. In some implementations, one of the one or more available patterns 134 is designated as an activated pattern at any one time, and the garment controller 132 causes the display resources 136 to display the activated pattern.

In some implementations, the display resources 136 may be an array of individual lighting devices embedded into the fabric of the framework garment 130, such as, for example, light emitting diodes (LEDs), organic LEDs (OLEDS), active-matrix organic LEDs (AMOLEDs), or other lighting devices or display systems.

The system 100 also includes a location beacon 150. In some implementations, the location beacon 150 is a short range wireless transmitter broadcasting a location identifier associated with the particular location. The location beacon 150 may utilize various wireless techniques, including, but not limited to, BLUETOOTH, BLUETOOTH LE, NFC, or other techniques. The mobile device 120 includes a location component 152. In some implementations, the location component 152 may be operable to detect the location identifier transmitted by the location beacon 150 when the mobile device 120 is within a certain distance of the location beacon 150. The location component 152 may, upon receiving the location identifier from the location beacon 150, relay the location identifier to pattern browser 122, which may, in response, present one or more patterns associated with the location identifier to the user. In some cases, the location identifier may be provided to the content management system 104 which may, in response, provide one or more patterns associated with the location identifier to the pattern browser 122 for presentation to the user. In addition, in some cases, the location component 152 may provide an indication to the content management system 104 when it is no longer receiving the signal from the location beacon 150, indicating that the mobile device 120 is moved out of range of location beacon 150. In response, pattern browser 122 may hide the patterns associated with the location identifier from the user.

In some implementations, the location component 152 may periodically send an indication of the location of the mobile device 120 to the content management system 104. For example, the location component 152 may be a Global Positioning System (GPS) receiver, and may send GPS coordinates representing the current location of the mobile device 120 to the content management system 104. In such a case, the content management system 104 may have particular locations defined as ranges of GPS coordinates, and may present associated patterns when the current GPS coordinates of the mobile device 120 are within those ranges.

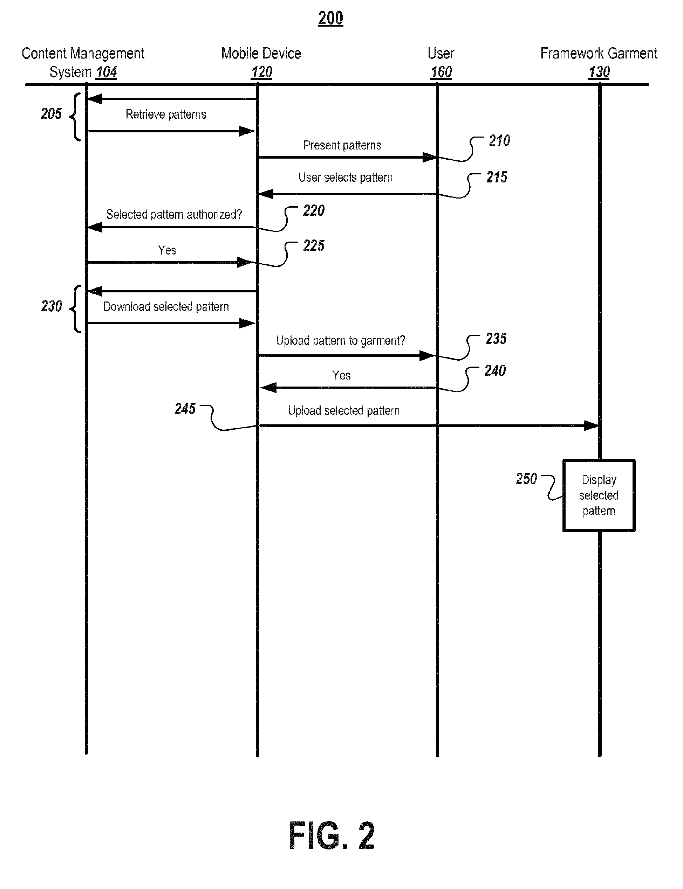

FIG. 2 is a message sequence diagram of an example interaction 200 between components for managing patterns for use with a framework garment. Interaction 200 represents an example message sequence between the components that may occur when the user 160 is presented with a list of patterns, selects a pattern, downloads the selected pattern, and uploads the selected pattern to the framework garment 130.

At 205, the mobile device 120 retrieves one or more patterns from the content management system 104. As described relative to FIG. 1, the pattern browser 122 executing on the mobile device 120 may communicate with the content management system 104 to retrieve the pattern information and/or layout information associated with the patterns.

At 210, the mobile device 120 presents the patterns to the user 160. In some implementations, the mobile device 120 may present a visual representation of each pattern, as well as information about the pattern to the user 160. In some implementations, the mobile device 120 may present a subset of the retrieved patterns, such as, for example, in situations where a certain pattern is configured to be displayed based on the user's location or at a particular time, as described relative to FIG. 1. Examples of how the patterns may be presented are shown in FIGS. 3-6.

At 215, the user 160 selects one of the presented patterns. In some implementations, the user 160 selects one of the presented patterns by touching a portion of a touchscreen of the mobile device 120 associated with the selected pattern. The user 160 may also select the pattern using other types of input devices, including, but not limited to, a keyboard, a mouse, a scroll wheel, a microphone by using voice input, or using other types of input devices.

At 220, the mobile device 120 sends a message to the content management system 104 to determine whether the user 160 is authorized to access the selected pattern. In some implementations, the authorization request may indicate an intent to purchase a particular pattern by the user 160. For example, the authorization request may be sent in response to the user 160 indicating they wish to buy the selected pattern, such as by activating a "buy it" button such as that shown in FIG. 3. In some cases, the authorization request may include payment details associated with the user 160, such as, for example, credit card information, debit card information, PAYPAL account details, bank account information, or other payment details. In some implementations, the payment details for the user 160 may be stored by the content management system 104, and thus need not be sent by the mobile device 120.

In some cases, the authorization request sent at 220 may indicate a particular pattern to which the user 160 has previously purchased rights, e.g., digital ownership or a rental period. In such a case, the content management system 104 may confirm that the user 160 has the asserted rights to the selected pattern, and return an indication to the mobile device.

In response to receiving the authorization request at 220, the content management system 104 may initiate a payment transaction for a price associated with the selected pattern using the payment details associated with the user 160. For example, the content management system 104 may communicate with a credit card processor to initiate a payment for a purchase price associated with the selected pattern. Upon receiving confirmation that the payment completed successfully, the content management system 104 may, at 225, return indication that the user 160 is authorized to use the selected pattern.

At 230, the selected pattern is downloaded to the mobile device 120 from the content management system 104. In some implementations, downloading the selected pattern includes transferring an electronic file representing the selected pattern from the content management system 104 to the mobile device 120. Downloading the selected pattern may also include downloading information associated with the selected pattern, such as information to be displayed to the user with the selected pattern in the users list of downloaded patterns (or wardrobe). In some cases, mobile device 120 may download the selected pattern from the content management system 104 over a communications network using known communications techniques, such as, for example, LTE, WI-FI, BLUETOOTH, BLUETOOTH LE, or other wired or wireless communication techniques. In some cases, downloading the selected pattern may include storing the selected pattern in a database or other storage structure on the mobile device 120, as described relative to FIG. 1.

At 235, mobile device 120, in response to downloading the selected pattern, may query the user whether to upload the pattern to the framework garment 130. In some cases, the user selecting the pattern at 215 may indicate that the user wants to upload the selected pattern to the framework garment 130, such as in cases where the user has already purchased the pattern and is selecting it to be downloaded from the content management system 104. At 240, the user 160 indicates that the selected pattern should be uploaded to the framework garment. As discussed previously, syndication may be received through any of the various input devices of the mobile device 120 discussed previously.

At 245, the mobile device 120 uploads the selected pattern to the framework garment 130. In some cases, the mobile device 120 may transfer the electronic file representing the selected pattern to the framework garment 130 using a wireless communication technique, such as, for example, BLUETOOTH, BLUETOOTH LE, LTE, WI-FI, or other techniques. In some implementations, mobile device 120 may be physically connected to the framework garment 130 in order to transfer the selected pattern, such as, for example, using a Universal Serial Bus (USB) connection.

At 250, the framework garment 130 displays the selected pattern. As described relative to FIG. 1, the garment controller 132 of the framework garment 130 controls the display resources 136 based on the information contained in the electronic file associated with the selected pattern to cause the display resources 136 to display the selected pattern. In some implementations, the framework garment 130 displays the selected pattern automatically in response to the selected pattern being uploaded to the framework garment 130. The framework garment 130 may also display the selected pattern in response to a request from the mobile device 120 to activate the selected pattern. In some cases, the framework garment 130 may store multiple patterns, and the mobile device 120 may request activation of any of the stored patterns.

FIG. 3 is an example user interface 300 presenting a representation of a particular pattern for use with a framework garment. In operation, the user interface 300 may provide information to the user about the particular pattern, and may allow the user to purchase, rent, or try out the particular pattern. As shown, the interface 300 includes a pattern name 302 for the particular pattern (in the figure, "PomPom"). The interface 300 also includes one or more representations 304 of the particular pattern. As shown, the one or more representations 304 may be images representing the particular pattern. The interface 300 also includes a designer field 306 identifying an entity that designed the particular pattern (in the figure, "FashCo"). In some cases, the designer field 306 may identify a company selling the particular pattern, or an individual responsible for the aesthetic design of the particular pattern.

The interface 300 also includes a design type field 308. The design type field 308 may indicate a type associated with particular pattern, including, but not limited to, static, animated, or other types. The interface 300 also includes a collection field 310 indicating a collection of patterns to which the particular pattern belongs (in the figure, "Ribbons Collection"). The pattern description field 320 includes a text description of the particular pattern. In some cases, the pattern description field 320 may be an unstructured text field displaying natural language sentences describing the particular pattern.

The interface 300 also includes a set of components allowing user to purchase, rent, or try on the particular pattern. As shown, the interface 300 includes a buy it button 312 and a price field 314 including a purchase price for the particular pattern (in this case "£.99"). In some cases, the user may activate the buy it button 312 to purchase the particular pattern for the purchase price shown in the price field 314. Upon activation of the buy button 312, a payment transaction may be initiated for the purchase price, as described relative to FIG. 2.

The interface also includes a rent it button 316 and a rental information field 318 showing a price and duration for the rental. The user may activate the rent it button 316 to purchase the right to use the particular pattern for the duration of the rental. In some cases, after the rental period expires, the particular pattern may be removed from any framework garments on which it is activated or stored, and the user may be required to purchase additional rights to continue using the particular pattern.

The interface 300 also includes a 'try it on' button 322. The user may activate the 'try it on' button 322 to activate the particular pattern on a framework garment for a limited time period (in the figure, one minute) in order to try the particular pattern before purchasing. When the trial period expires, the particular pattern may be removed from any framework garments on which it is activated or stored, and the user may be required to purchase additional rights to continue using the particular pattern. In some cases, the 'try it on' button 322 may initiate a free rental of the particular pattern for a short duration (e.g., 1 minute). In some implementations, a "trial" button may also be included to initiate a free rental of the particular pattern for a longer duration than the "try it on" button (e.g., 1 day). The user may also be prompted for feedback on the particular pattern at the end of the trial period.

Interface 300 also includes a set of share buttons 324 may be activated by the user to share the particular pattern and a notification of the purchase, rental, or trial of this pattern on a social network associated with each of the share buttons 324. The social networks associated with the share buttons 324 may include, but are not limited to, TWITTER, FACEBOOK, GOOGLE+, PINTEREST, MYSPACE, INSTAGRAM, email, SMS, or other social networks.

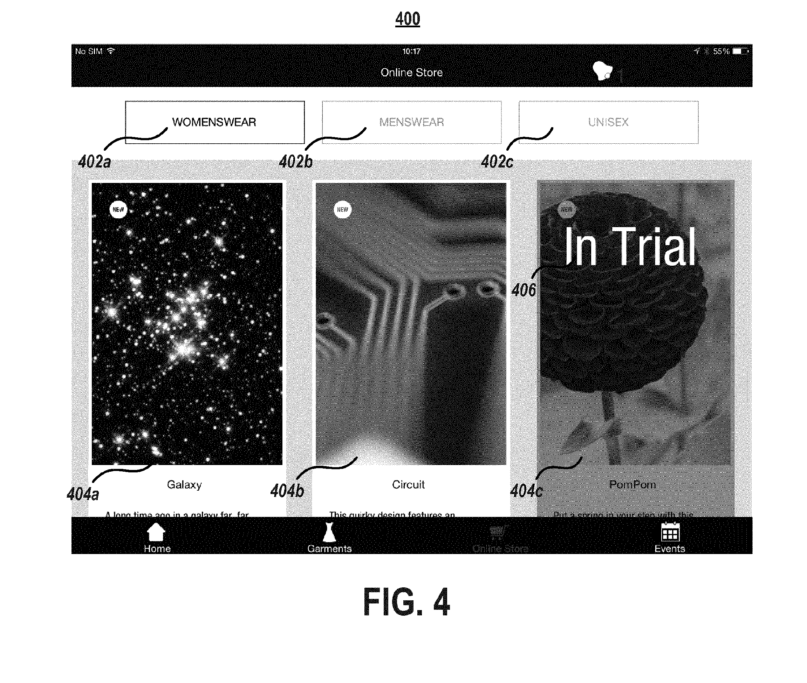

FIG. 4 is an example user interface 400 presenting multiple representations of patterns for use with a framework garment. The interface 400 includes one or more categories 402a-c. When the user selects one of the one or more categories 402a-c, the interface 400 may display patterns associated with particular category, such as the patterns 404a-c associated with the selected category 402a. The interface 400 may also include a trial status indicator 406 indicating that the user is currently "trialling" the pattern 404c, as described previously.

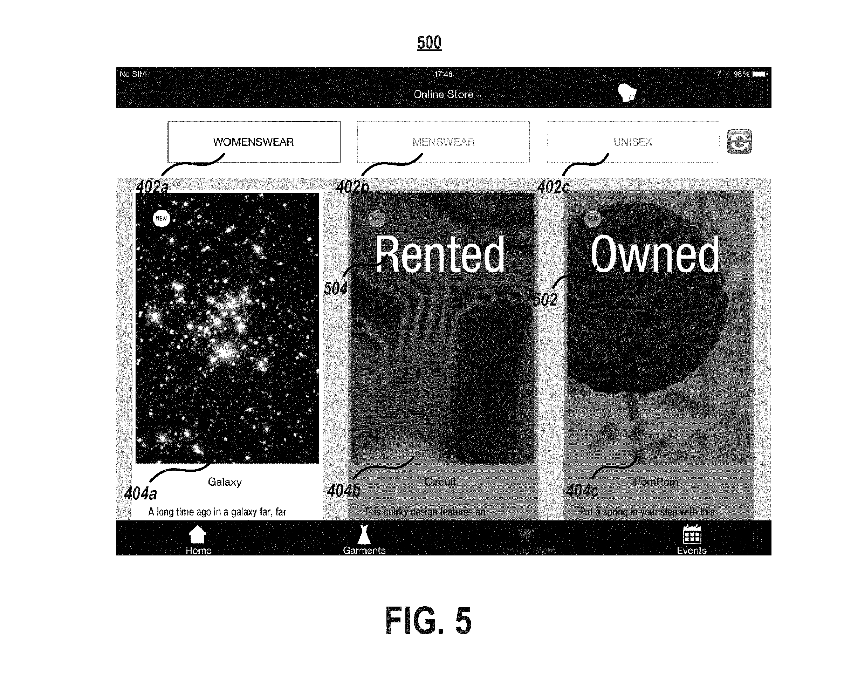

FIG. 5 is an example user interface 500 presenting multiple representations of patterns for use with a framework garment and status indicators for the patterns. The interface 500 includes the categories 402a-c, and the patterns 404a-c shown in FIG. 4. The interface 500 includes an ownership indicator 502 that is displayed over the pattern 404c to indicate that the user owns the pattern 404c. The interface 500 also includes a rental status indicator 504 displayed over the pattern 404b to indicate that the user is currently renting the pattern 404b.

FIG. 6 is an example user interface 600 for managing patterns previously purchased or downloaded by the user. The interface 600 includes a representation 602 of a currently worn pattern 612. The currently worn pattern 612 is also highlighted to indicate that it is currently being worn. A take it off button 614 is associated with the currently worn pattern 612. The user may activate the take it off button 614 to cause the currently worn pattern to be deactivated on the particular framework garment on which it is activated.

Interface 600 also includes an available pattern 604. The available pattern 604 is associated with a wear it button 606. The user may activate the wear it button 606 to cause the available pattern 604 to be uploaded and activated on the particular framework garment. The available pattern 604 is also associated with a friend it button 608. The user may activate the friend it button to electronically share the associated pattern, such as, for example, on social networks, through email, or through other mechanisms.

The available pattern 604 includes a status field 610. The status field 610 shows the type of rights the user currently possesses for the available pattern 604, in this case the rights denoted by the "RENT24" status, which may indicate a 24 hour rental. The status field 616 associated with the currently worn pattern 612 indicates the status of "OWN" for the pattern, which may indicate that the user has purchased the currently worn pattern 612.

The interface 600 also includes a wear time remaining indicator 618 indicating an amount of time the user is authorized to continue wearing the currently worn pattern 602. For owned patterns such as currently worn pattern 602, the wear time remaining indicator 618 may display "unlimited," indicating that there is no limit on the amount of time the user can wear the pattern. For rented or trial patterns, the wear time remaining indicator 618 may display the amount of time until the rental period ends.

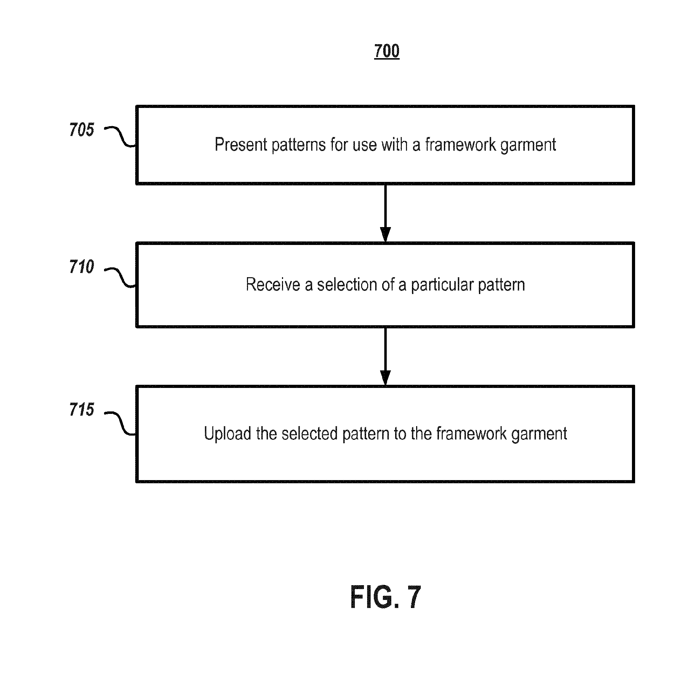

FIG. 7 is a flow chart of an example method 700 for managing patterns for use with electronic framework garments. At 705, one or more representations are presented each associated with a corresponding pattern for use with a framework garment. In some cases, the framework garment is configured to display an activated pattern and includes a set of display resources, and the activated pattern is associated with a machine-readable representation operable to cause the set of display resource to display the activated pattern. In some implementations, framework garments located near the user are detected and added to a set of registered framework garments in response to a selection of the detected framework garment by the user. In some cases presenting one or more representations each associated with a corresponding pattern for use with the framework garment is performed in response to selection of the framework garment from the set of registered framework garments.

A 710, a selection of a particular representation is received from the one or more representations, the particular representation corresponding to a particular pattern. In some cases, receiving the selection of the particular pattern includes receiving an electronic payment for an amount associated with the particular pattern.

At 715, in response to receiving the selection of the particular representation, the particular pattern is caused to be uploaded to the framework garment. In some cases, the particular pattern is associated with a time period, and after causing the particular pattern to be uploaded to the framework garment, the time period associated with the particular pattern is determined to have expired. In response to determining that the time period associated with the particular pattern has expired, the particular pattern is caused to be removed from the framework garment. In some cases, causing the particular pattern to be uploaded to the framework garment includes wirelessly transferring a file associated with the particular pattern to the framework garment.

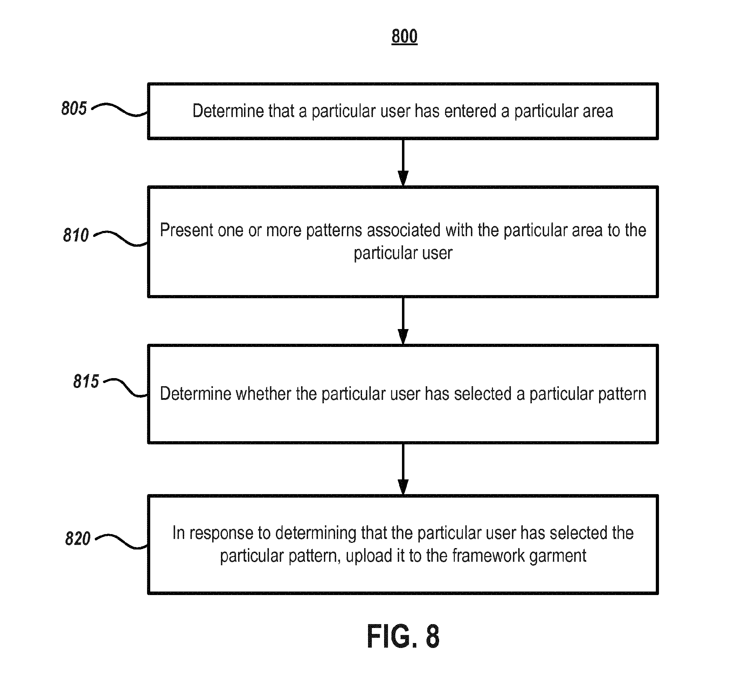

FIG. 8 is a flow chart of an example method 800 for presenting particular patterns based on the user's location. At 805, a determination is made that a particular user has entered a particular area. In some cases, determining that the particular user has entered the particular area includes receiving an indication from a short range wireless component including a location identifier associated with the particular area. The indication from the short range wireless component may be received from a Bluetooth Low Energy (LE) beacon. In some cases, determining that the particular user has entered the particular area includes determining that a current location indicator associated with the particular user is within the particular area. The current location indicator may include a set of Global Positioning System (GPS) coordinates.

At 810, in response to determining the particular user has entered the particular area, one or more representations associated with a particular area are presented to the particular user, each representation associated with a corresponding pattern for use with the framework garment. In some cases the framework garment includes a set of display resources, and the pattern includes a machine-readable representation operable to cause the set of display resource to display a visual representation of the pattern.

At 815, a determination is made whether the particular user has selected a particular representation from the one or more representations associated with particular area, the particular representation corresponding to a particular pattern.

At 820, in response to determining the particular user has selected the particular representation, the particular pattern is caused to be uploaded to the framework garment. In some cases the method 800 also includes determining that the particular user has left the particular area, and in response to determining that the particular user has left the particular area and that the particular user has not selected a particular pattern, hiding the one or more patterns associated with the particular area from the particular user. In some cases, causing the particular pattern to be uploaded to the framework garment includes wirelessly transferring a file associated with the particular pattern to the framework garment. In some cases, after uploading the particular pattern, a determination may be made that the particular user has left the particular area. In response, the particular pattern may be removed from the framework garment. In some cases, the patterns may be hidden or removed from the framework garment based on factors other than the user's presence in the particular area, such as, for example, after the passage of a certain amount of time.

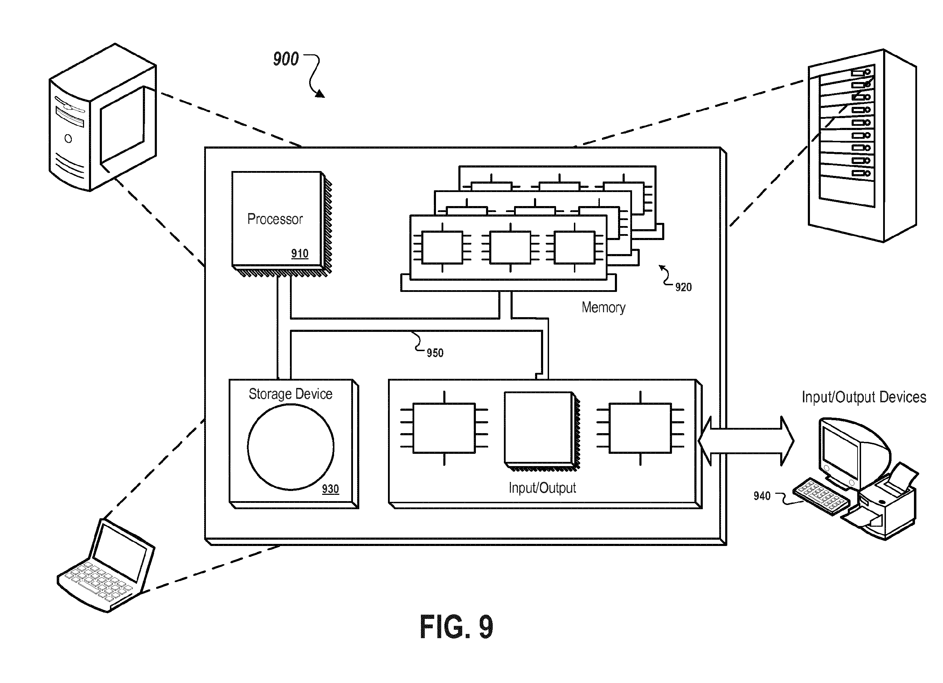

FIG. 9 is a schematic diagram of an example of a generic computer system. The system 900 can be used for the operations described in association with the methods 700 and 800, and used to present and perform the operations of the user interfaces 300-600, according to some implementations. The system 900 may be included in the system 100.

The system 900 includes a processor 910, a memory 920, a storage device 930, and an input/output device 940. Each of the components 910, 920, 930, and 940 are interconnected using a system bus 950. The processor 910 is capable of processing instructions for execution within the system 900. In one implementation, the processor 910 is a single-threaded processor. In another implementation, the processor 910 is a multi-threaded processor. The processor 910 is capable of processing instructions stored in the memory 920 or on the storage device 930 to display graphical information for a user interface on the input/output device 940.

The memory 920 stores information within the system 900. In one implementation, the memory 920 is a computer-readable medium. In one implementation, the memory 920 is a volatile memory unit. In another implementation, the memory 920 is a non-volatile memory unit. The processor 910 and the memory 920 may perform data manipulation and validation, including execution of data quality jobs.

The storage device 930 is capable of providing mass storage for the system 900. In one implementation, the storage device 930 is a computer-readable medium. In various different implementations, the storage device 930 may be a floppy disk device, a hard disk device, an optical disk device, or a tape device. The storage device 930 may store monitoring data collected and data quality rule representations.

The input/output device 940 provides input/output operations for the system 900. In one implementation, the input/output device 940 includes a keyboard and/or pointing device. In another implementation, the input/output device 940 includes a display unit for displaying graphical user interfaces. The input/output device 940 may be used to perform data exchange with source and target data quality management and/or processing systems.

The features described can be implemented in digital electronic circuitry, or in computer hardware, firmware, software, or in combinations of them. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of implementations have been described. Nevertheless, it will be understood that various modifications may be made without departing from the spirit and scope of the disclosure. Accordingly, other implementations are within the scope of the following claims.

### EMBODIMENTS

Although the present invention is defined in the attached claims, it should be understood that the present invention can also (alternatively) be defined in accordance with the following embodiments:
1. A computer-implemented method executed by one or more processors, the method comprising:
   presenting one or more representations each associated with a corresponding pattern for use with a framework garment;
   receiving a selection of a particular representation from the one or more representations, the particular representation corresponding to a particular pattern; and
   in response to receiving the selection of the particular representation, causing the particular pattern to be uploaded to the framework garment.
2. The method of embodiment 1, wherein the framework garment is configured to display an activated pattern and includes a set of display resources, and wherein the activated pattern is associated with a machine-readable representation operable to cause the set of display resource to display the activated pattern.
3. The method of embodiment 1, wherein the particular pattern is associated with a time period, and the method further comprises:
   after causing the particular pattern to be uploaded to the framework garment, determining that the time period associated with the particular pattern has expired; and
   in response to determining that the time period associated with the particular pattern has expired, causing the particular pattern to be removed from the framework garment.
4. The method of embodiment 1, wherein the framework garment is included in a set of registered framework garments associated with a user, and the method further comprises:
   detecting framework garments located near the user; and
   adding a detected framework garment to the set of registered framework garments in response to a selection of the detected framework garment by the user.
5. The method of embodiment 4, wherein presenting one or more representations is performed in response to selection of the framework garment from the set of registered framework garments.
6. The method of embodiment 1, wherein causing the particular pattern to be uploaded to the framework garment includes wirelessly transferring a file associated with the particular pattern to the framework garment.
7. The method of embodiment 1, wherein receiving the selection of the particular pattern includes receiving an electronic payment for an amount associated with the particular pattern.
8. The method of embodiment 1, wherein presenting one or more representations each associated with a corresponding pattern for use with a framework garment includes:
   identifying one or more patterns associated with a current time; and
   presenting one or more representations each associated with a corresponding pattern from the one or more identified patterns associated with the current time.
9. A computer-implemented method executed by one or more processors, the method comprising:
   determining that a particular user has entered a particular area;
      in response to determining that the particular user has entered the particular area, presenting one or more representations associated with the particular area to the particular user, each representation associated with a corresponding pattern for use with a framework garment;
   determining whether the particular user has selected a particular representation from the one or more representations associated with the particular area, the particular representation corresponding to a particular pattern; and
   in response to determining that the particular user has selected the particular representation, causing the particular pattern to be uploaded to the framework garment.
10. The method of embodiment 9, wherein framework garment includes a set of display resources, and the pattern includes a machine-readable representation operable to cause the set of display resource to display a visual representation of the pattern.
11. The method of embodiment 9, further comprising:
   determining that the particular user has left the particular area; and
   in response to determining that the particular user has left the particular area and that the particular user has not selected a particular pattern, hiding the one or more patterns associated with the particular area from the particular user.
12. The method of embodiment 9, wherein determining that the particular user has entered the particular area includes receiving an indication from a short range wireless component including a location identifier associated with the particular area, and presenting the one or more patterns associated with the particular area to the particular user includes presenting one or more patterns associated with the location identifier.
13. The method of embodiment 12, wherein receiving an indication from the short range wireless component includes receiving the indication from a Bluetooth Low Energy (LE) beacon.
14. The method of embodiment 9, wherein causing the particular pattern to be uploaded to the framework garment includes wirelessly transferring a file associated with the particular pattern to the framework garment.
15. The method of embodiment 9, further comprising:
   after uploading the particular pattern, determining that the particular user has left the particular area; and
   in response to determining that the particular user has left the particular area, removing the particular pattern from the framework garment.
16. The method of embodiment 9, wherein determining that the particular user has entered the particular area includes determining that a current location indicator associated with the particular user is within the particular area.
17. The method of embodiment 16, wherein the current location indicator includes a set of Global Positioning System (GPS) coordinates.
18. A system comprising:
   memory for storing data; and
   one or more processors operable to perform operations comprising:
      presenting one or more representations each associated with a corresponding pattern for use with a framework garment;
      receiving a selection of a particular representation from the one or more representations, the particular representation corresponding to a particular pattern; and
      in response to receiving the selection of the particular representation, causing the particular pattern to be uploaded to the framework garment.
19. The system of embodiment 18, wherein the framework garment is configured to display an activated pattern and includes a set of display resources, and wherein the activated pattern is associated with a machine-readable representation operable to cause the set of display resource to display the activated pattern.
20. The system of embodiment 18, wherein the particular pattern is associated with a time period, and the operations further comprise:
   after causing the particular pattern to be uploaded to the framework garment, determining that the time period associated with the particular pattern has expired; and
   in response to determining that the time period associated with the particular pattern has expired, causing the particular pattern to be removed from the framework garment.

## Claims

1. A computer-implemented method executed by one or more processors, the method comprising:
presenting one or more representations each associated with a corresponding pattern for use with a framework garment;
receiving a selection of a particular representation from the one or more representations, the particular representation corresponding to a particular pattern; and
in response to receiving the selection of the particular representation, causing the particular pattern to be uploaded to the framework garment.

2. The method of claim 1, wherein the framework garment is configured to display an activated pattern and includes a set of display resources, and wherein the activated pattern is associated with a machine-readable representation operable to cause the set of display resource to display the activated pattern.

3. The method of claim 1, wherein the particular pattern is associated with a time period, and the method further comprises:
after causing the particular pattern to be uploaded to the framework garment, determining that the time period associated with the particular pattern has expired; and
in response to determining that the time period associated with the particular pattern has expired, causing the particular pattern to be removed from the framework garment.

4. The method of claim 1, wherein the framework garment is included in a set of registered framework garments associated with a user, and the method further comprises:
detecting framework garments located near the user; and
adding a detected framework garment to the set of registered framework garments in response to a selection of the detected framework garment by the user.

5. The method of claim 4, wherein presenting one or more representations is performed in response to selection of the framework garment from the set of registered framework garments.

6. The method of claim 1, wherein receiving the selection of the particular pattern includes receiving an electronic payment for an amount associated with the particular pattern.

7. The method of claim 1, wherein presenting one or more representations each associated with a corresponding pattern for use with a framework garment includes:
identifying one or more patterns associated with a current time; and
presenting one or more representations each associated with a corresponding pattern from the one or more identified patterns associated with the current time.

8. The method of claim 1, wherein:
the method further comprises determining that a particular user has entered a particular area;
presenting the one or more representations comprises, in response to determining that the particular user has entered the particular area, presenting one or more representations associated with the particular area to the particular user, each representation associated with a corresponding pattern for use with a framework garment;
receiving the election of the particular representation comprises determining whether the particular user has selected a particular representation from the one or more representations associated with the particular area,
the particular representation corresponding to a particular pattern.

9. The method of claim 8, wherein framework garment includes a set of display resources, and the pattern includes a machine-readable representation operable to cause the set of display resource to display a visual representation of the pattern.

10. The method of claim 8, further comprising:
determining that the particular user has left the particular area; and
in response to determining that the particular user has left the particular area and that the particular user has not selected a particular pattern, hiding the one or more patterns associated with the particular area from the particular user.

11. The method of claim 8, wherein determining that the particular user has entered the particular area includes receiving an indication from a short range wireless component including a location identifier associated with the particular area, and presenting the one or more patterns associated with the particular area to the particular user includes presenting one or more patterns associated with the location identifier, for example, wherein receiving an indication from the short range wireless component includes receiving the indication from a Bluetooth Low Energy beacon.

12. The method of claim 1 or 8, wherein causing the particular pattern to be uploaded to the framework garment includes wirelessly transferring a file associated with the particular pattern to the framework garment.

13. The method of claim 8, further comprising:
after uploading the particular pattern, determining that the particular user has left the particular area; and
in response to determining that the particular user has left the particular area, removing the particular pattern from the framework garment.

14. The method of claim 8, wherein determining that the particular user has entered the particular area includes determining that a current location indicator associated with the particular user is within the particular area, for example, wherein the current location indicator includes a set of Global Positioning System coordinates.

15. A system comprising:
memory for storing data; and
one or more processors operable to perform operations comprising the method of any one of claims 1 to 14.
